Europäisches Patentamt

European Patent Office

Office européen des brevets

(19)

(11) Veröffentlichungsnummer: **0 302 047 B1**

(12) **EUROPÄISCHE PATENTSCHRIFT**

(45) Veröffentlichungstag der Patentschrift:
18.09.91 Patentblatt 91/38

(51) Int. Cl.⁵ : **C21B 13/00, F27B 1/02**

(21) Anmeldenummer: **88890194.9**

(22) Anmeldetag: **21.07.88**

(54) **Verfahren und Anlage zur Gewinnung von flüssigem Roheisen oder Stahlvorprodukten aus stückigen, eisenoxidhältigen Einsatzstoffen.**

(30) Priorität : 30.07.87 AT 1933/87

(43) Veröffentlichungstag der Anmeldung :
01.02.89 Patentblatt 89/05

(45) Bekanntmachung des Hinweises auf die
Patenterteilung :
18.09.91 Patentblatt 91/38

(84) Benannte Vertragsstaaten :
BE DE FR GB IT LU NL SE

(56) Entgegenhaltungen :
EP-A- 0 010 627
DE-A- 2 819 465
DE-B- 1 145 201
US-A- 4 556 418

(73) Patentinhaber : DEUTSCHE VOEST-ALPINE
INDUSTRIEANLAGENBAU GMBH
Neusser Strasse 111
W-4000 Düsseldorf 1 (DE)

(72) Erfinder : Sulzbacher, Horst, Dipl.-Ing.
Dirnböckweg 5
A-8700 Leoben (AT)
Erfinder : Hubig, Markus, Dipl.-Ing.
Eckener Strasse 7
W-5100 Aachen (DE)

(74) Vertreter : Wolfram, Gustav, Dipl.-Ing.
Schwindgasse 7 P.O. Box 205
A-1041 Wien (AT)

## Beschreibung

Die Erfindung betrifft ein Verfahren zur Gewinnung von flüssigem Roheisen oder Stahlvorprodukten aus stückigen, eisenoxidhältigen Einsatzstoffen, wobei die Einsatzstoffe in einer Direktreduktionszone zu Eisenschwamm reduziert werden, der Eisenschwamm in einer Einschmelzvergasungszone unter Zufuhr von Kohlenstoffträgern und sauerstoffhältigem Gas, welche ein Kohlefließbett ausbilden, erschmolzen und ein CO- und $H_2$-hältiges Reduktionsgas erzeugt wird, welches in die Direktreduktionszone eingeleitet und dort umgesetzt wird, sowie eine Anlage zur Durchführung des Verfahrens.

Ein Verfahren dieser Art ist beispielsweise aus der EP-A1-0010627 bekannt, bei dem in der Einschmelzvergasungszone aus stückigen Kohlenstoffträgern durch Einblasen von sauerstoffhältigem Gas ein Fließbett gebildet wird, in welchem die in der Direktreduktionszone gebildeten und der Einschmelzvergasungszone von oben zugeführten Eisenschwammpartikel abgebremst und geschmolzen werden. In der Direktreduktionszone fällt eine große Menge an Topgas an, welches einen erheblichen Gehalt an Kohlenmonoxid und Wasserstoff aufweist. Kann dieses Topgas wirtschaftlich genutzt werden, liegen die Erzeugungskosten für Roheisen bzw. Stahlvorprodukte sehr niedrig.

Ein Problem in der Stahlindustrie stellt die Verwertung von Schrott dar, der durch Abtragung oder Zerstörung bereits genutzter Objekte und Geräte, wie z.B. Konsumschrott, anfällt.

Konsumschrott, insbesondere Autoschrott, ist durch einen hohen Anteil an organischen Verunreinigungen und nichteisenmetallischen Begleitstoffen charakterisiert und ist daher nur mit großem Aufwand zu verarbeiten. Derzeit ist es üblich, Schrott in Elektrolichtbogenöfen, Kupol- und Hochöfen und in Sauerstoffkonvertern zu schmelzen. Für minderwertigen Konsumschrott eignen sich jedoch nur Kupol- und Hochöfen. Allerdings müssen vor der Verwertung jegliche organische Beimengungen aufwendig entfernt werden und das unvermeidliche Einbringen von Metallen und Verbindungen mit einem niedrigeren Schmelzpunkt als Eisen muß so weit wie möglich minimiert werden, da sie sich entweder im Hochofen anreichern und zur Zerstörung des Mauerwerkes führen oder mit dem Abgas ausgetragen werden.

Ein Verfahren und eine Vorrichtung zur Herstellung von Rohmetall als Einsatz für die Stahlerzeugung beschreibt die DE-A-2819465. Als Ausgangsmaterial dient Eisenerz und gegebenenfalls auch Gußeisenschrott und Stahlschrott. Eine Verwertung von minderwertigem Konsumschrott wird nicht erwähnt.

Die Erfindung stellt sich die Aufgabe, ein Verfahren und eine Anlage zur Schrottverwertung zu schaffen, mit denen es insbesondere möglich ist, stark verunreinigten Schrott, wie z.B. Konsumschrott, in wirtschaftlicher Weise einer Wiederverwertung zuführen zu können.

Der Grundgedanke der Erfindung liegt in der Heranziehung des in der Beschreibungseinleitung definierten Direktreduktions- und Einschmelzverfahrens für die Schrottverwertung, wobei die Erfindung dadurch gekennzeichnet ist, daß

a) zusätzlich zum Eisenschwamm Schrott in die Einschmelzvergasungszone chargiert wird,

b) der Schrott ein Schüttgewicht zwischen 300 und 1000 kg/m³, vorzugsweise zwischen 400 und 600 kg/m³, aufweist, und

c) die Temperatur des Kohlefließbettes auf 1500 bis 1700°C gehalten wird,

wobei der Schrott unter Aufrechterhaltung reduzierender Bedingungen das Kohlefließbett passiert, aufgekohlt und geschmolzen wird und gegebenenfalls vorhandene organische Verunreinigungen pyrolysiert werden.

Das Schüttgewicht des Schrottes von vorzugsweise 400 bis 600 kg/m³ ist am Schüttgewicht des Kohlefließbettes orientiert und ermöglicht ein langsames Absinken der Schrottstücke im Kohlefließbett. Dadurch wird sichergestellt, daß für Aufkohlung und Überhitzung des Schrottes genügend Zeit zur Verfügung steht.

Der Schrott schmilzt in Abhängigkeit von der Fließbettemperatur (1500 bis 1700°C) sowie der Stückgröße und des Gewichtes auf und sammelt sich zusammen mit Schlacke am Boden des Einschmelzvergasers. Durch den Kontakt des Eisens mit dem Kohlebett erfolgt die Aufkohlung und damit eine Absenkung der Liquidustemperatur des Metalles. Die Höhe der Fließbettemperatur ist außerdem noch über die Brennstoffqualität und über die Schrottzugabegeschwindigkeit regelbar.

Eine Fließbettemperatur von 1500 bis 1700°C gestattet eine vollständige Zersetzung gegebenenfalls vorhandener organischer Verunreinigungen.

Vorzugsweise wird der Schrott vor dem Chargieren in Stück- oder Paketform aufbereitet, wodurch das Schüttgewicht eingestellt werden kann.

Vorteilhaft wird der Schrott vor der Aufbereitung mit brennbaren Stoffen aus Müll vermischt. Hierdurch gelingt es, Müll als Brennstoff einzusetzen, der andernfalls aufgrund seines geringen spezifischen Gewichtes nicht in das Kohlefließbett gelangen könnte, sondern mit dem Reduktionsgas ausgetragen werden würde. Ein besonderer Vorteil dieser Variante ist in der Einsparung höherwertiger Brennstoffe zu sehen.

Minderwertiger Schrott mit einem hohen Anteil an organischen Verunreinigungen, wie Fetten, Ölen, Textilien oder Kunststoffen, wird vorzugsweise ohne Vorwärmung direkt in die Einschmelzvergasungszone einge-

EP 0 302 047 B1

setzt. Dadurch wird die Bildung von Schwelgas und Schwelkoks vermieden, weil der Schrott sofort auf die hohe Temperatur des Kohlefließbettes im Einschmelzvergaser gebracht und die organischen Verunreinigungen vollständig zu Wasserstoff, Kohlenmonoxid und Kohlenstoff pyrolysiert werden. Dieser problemlose Direkteinsatz minderwertiger Schrottqualitäten gestattet eine wirtschaftliche Verwertung von Schrott, weil die Kosten für Reinigung und Sortierung wegfallen. Dazu kommt noch, daß die Pyrolysegase die Reduktionsbedingungen begünstigen und diese Gasgutschrift die Wirtschaftlichkeit des Verfahrens weiter erhöht.

Eine vorteilhafte Variante des Verfahrens besteht darin, daß kleinstückiger, an organischen Verunreinigungen armer Schrott vor dem Chargieren in die Einschmelzvergasungszone vorgewärmt wird, insbesondere durch gemeinsames Einbringen mit den eisenoxidhältigen Einsatzstoffen in die Direktreduktionszone. Durch das Vorwärmen des Schrottes wird sowohl der Brennstoffeinsatz im Einschmelzvergaser verringert als auch die Einschmelzgeschwindigkeit gesteigert.

Neben organisch-chemischen Verunreinigungen kann Schrott noch zusätzlich nichteisenmetallische Begleitelemente, wie Hg, Cd, Pb, Cu, Ni oder Cr enthalten. Diese Elemente können üblicherweise während der Stahlerzeugung überhaupt nicht oder nur in geringem Ausmaß entfernt werden und beeinträchtigen die Stahlqualität. Bedingt durch die hohe Temperatur im Kohlefließbett verdampft ein Teil dieser Elemente und geht in das Reduktionsgas über.

Vorteilhaft wird eine Anreicherung dieser Elemente im Reduktionsgas vermieden, indem zumindest ein Teilstrom des Reduktionsgases aus der Einschmelzvergasungszone abgezweigt und nach Naßreinigung der Einschmelzvergasungszone und/oder der Direktreduktionszone zugeführt wird. Die weitere Verwendung von überschüssigem Reduktionsgas ist hierdurch ohne großen Aufwand gesichert.

Nach einer bevorzugten Variante wird die Zuführung von sauerstoffhaltigem Gas in die Einschmelzvergasungszone zeitweise verringert bis unterbrochen und die Schrottzufuhr erhöht. Durch diese Maßnahme wird die Konzentration der Begleitmetalle im Reduktionsgas erhöht und ein effizienteres Abtrennen bei der Naßreinigung ermöglicht.

Von allen Stahlschädlingen bereiten Zinn und Kupfer üblicherweise große Schwierigkeiten, da sie die Qualität des Stahles bereits bei einem Anteil von wenigen hundertstel Prozent entscheidend beeinträchtigen. Beim erfindungsgemäßen Verfahren wird Zinn vorteilhaft mit Calcium entfernt. Bei Einsatz von zinnhältigem Schrott wird daher dem erschmolzenen Metall metallisches Calcium als solches oder in Calciumhalogenidschlacke gelöst zugesetzt.

Zur vollständigen Entfernung des Kupfers ist bis heute noch kein passender Reaktionspartner bekannt. Als günstig hat es sich erwiesen, wenn bei Einsatz von kupferhältigem Schrott dem erschmolzenen Metall Natriumsulfid- oder Natriumsulfatschlacken zugesetzt werden.

Mit Kunststoffen verunreinigter Schrott enthält häufig PVC, das von allen Massenkunststoffen das breiteste Verwendungsspektrum besitzt. Da es zu etwa 60% aus Chlor besteht, muß es bei der thermischen Verarbeitung als Problemstoff angesehen werden. Unter den Reaktionsbedingungen des Schrottschmelzens wird das im Kunststoff gebundene Chlor als Gas freigesetzt. Um ein Austragen mit dem Reduktionsgas zu verhindern, wird zweckmäßigerweise Feinkalk zugegeben, der Chlor unter Bildung von Calciumchlorid bindet.

Eine Anlage zur Durchführung des Verfahrens

— mit einem Direktreduktions-Schachtofen, der eine Einsatzstoff-Zuleitung für stückiges Eisenerz, eine Zuleitung für ein Reduktionsgas sowie eine Ableitung für das in ihm gebildete Reduktionsprodukt und eine Ableitung für das Topgas aufweist, und

— mit einem Einschmelzvergaser, in den eine das Reduktionsprodukt aus dem Schachtofen zuführende Leitung mündet und der Zuleitungen für sauerstoffhältige Gase und Kohlenstoffträger sowie eine in den Schachtofen mündende Ableitung für gebildetes Reduktionsgas sowie Abstiche für Roheisen und Schlacke aufweist,

ist gekennzeichnet durch eine Schrott-Chargiereinrichtung.

Vorteilhaft weist die Schrott-Chargiereinrichtung eine von einem gasdicht abschließbaren Schrottbunker zu einer Portioniereinrichtung führende Fördereinrichtung auf, wobei zwischen der Fördereinrichtung und der Schrott-Chargieröffnung eine gasdichte Verschlußeinrichtung vorgesehen ist.

Zweckmäßig ist die Portioniereinrichtung als Zellradschleuse ausgebildet.

Die Schrott-Chargieröffnung ist vorteilhafterweise in der Kuppel des Einschmelzvergasers, etwa in dessen Achse, vorgesehen. Nach einer weiteren günstigen Variante ist eine Schrott-Chargieröffnung am oberen Ende des Schachtofens vorgesehen.

Nach einer besonders zweckmäßigen Variante führt vom Einschmelzvergaser eine Reduktionsgasleitung zu einem Naßwäscher, von dem eine Reingas-Ableitung mit der Zuleitung für das Reduktionsgas oder mit der Ableitung für das Topgas verbindbar ist. Durch die Naßwäsche können die im Reduktionsgas mitgerissenen Stahlschädlinge, wie Zn, Pb oder Cadmium, effizient abgetrennt werden, wodurch die weitere Verwendung des Reduktionsgases wesentlich erleichtert wird. Außerdem kann im Naßwäscher wertstoffreicher Schlamm

3

gewonnen werden.

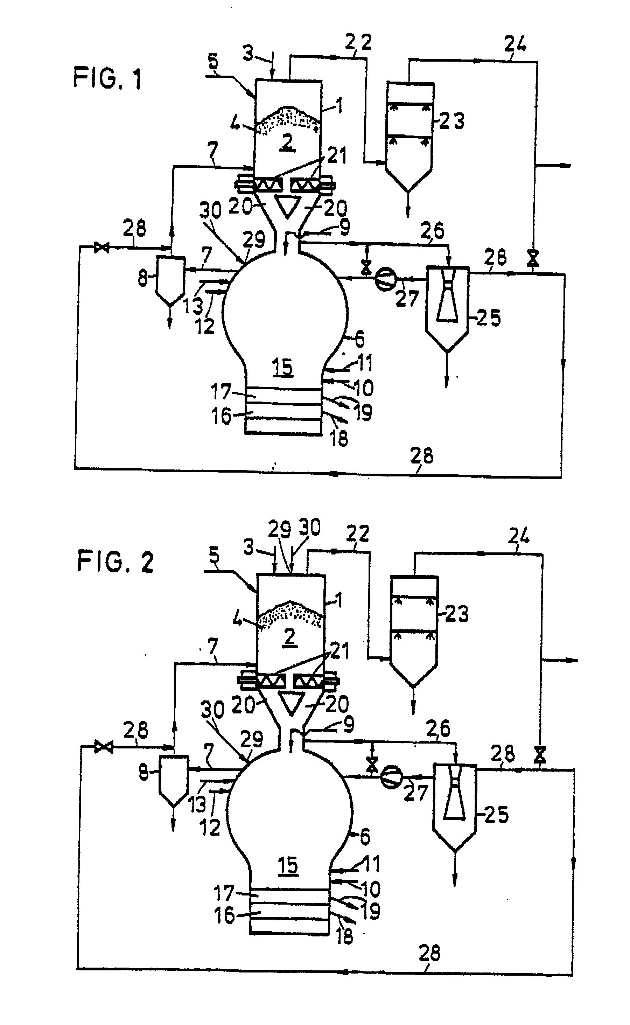

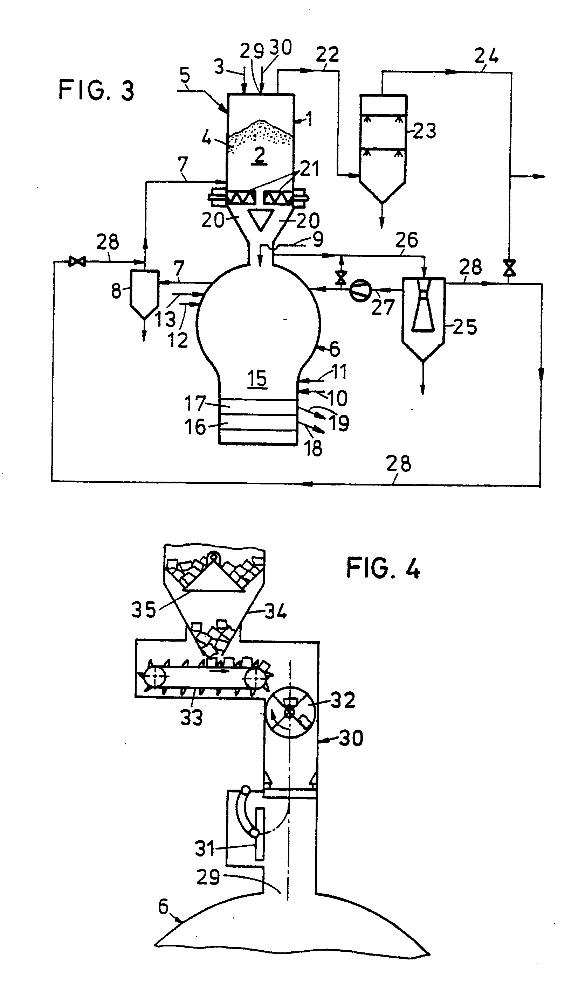

Die Erfindung ist anhand der Zeichnung nachfolgend näher erläutert, wobei in den Fig. 1 bis 3 in schematischer Darstellung jeweils eine vorteilhafte Ausführungsform einer erfindungsgemäßen Anlage veranschaulicht ist. Fig. 4 zeigt ein Detail der Fig. 1 in vergrößertem Maßstab.

Gemäß Fig. 1 ist eine als Schachtofen 1 ausgebildete Direktreduktionseinrichtung vorhanden, in deren Direktreduktionszone 2 von oben über eine Zuleitung 3 stückige eisenoxidhältige Einsatzstoffe 4, gegebenenfalls zusammen mit über eine Zuleitung 5 eingebrachten ungebrannten Zuschlägen, chargiert werden. Der Schachtofen 1 steht mit einem Einschmelzvergaser 6 in Verbindung, in dem aus Kohlenstoffträgern und sauerstoffhältigem Gas ein Reduktionsgas erzeugt wird, welches über eine Zuleitung 7 dem Schachtofen 1 zugeführt wird, wobei in der Zuleitung 7 eine Gasreinigungs- und eine Gaskühlungseinrichtung 8 vorgesehen sind.

Der Einschmelzvergaser 6 weist eine Zuführung 9 für feste, stückige Kohlenstoffträger, gegebenenfalls mehrere Zuleitungen 10, 11 für sauerstoffhältige Gase und Zuleitungen 12, 13 für bei Raumtemperatur flüssige oder gasförmige Kohlenstoffträger, wie Kohlenwasserstoffe, sowie für gebrannte Zuschläge auf. In dem Einschmelzvergaser 6 sammelt sich unterhalb der Einschmelzvergasungszone 15 schmelzflüssiges Roheisen 16 und schmelzflüssige Schlacke 17, die über je einen eigenen Abstich 18, 19 getrennt abgestochen werden.

Die im Schachtofen 1 in der Direktreduktionszone 2 zu Eisenschwamm reduzierten stückigen Einsatzstoffe werden dem Einschmelzvergaser 6 über Leitungen 20 zugeführt, beispielsweise mittels Austragschnecken 21. An dem oberen Teil des Schachtofens 1 schließt eine Ableitung 22 für das in der Direktreduktionszone 2 entstehende Topgas an. Dieses Topgas wird einer Gasreinigungseinrichtung 23 zugeleitet und steht danach über die Topgasleitung 24 einer weiteren Verwendung zur Verfügung.

Mit 25 ist eine Gaswascheinrichtung zur Abtrennung von Schwermetallen aus dem Reduktionsgas bezeichnet, die als feine Partikel im Einschmelzvergaser gebildet werden. Die Gaswascheinrichtung 25 ist über eine Reduktionsgasleitung 26 mit dem Einschmelzvergaser 6 verbunden. Das gereinigte Reduktionsgas kann über die Leitung 27 dem Einschmelzvergaser 6 oder über die Ableitung 28 in die Zuleitung 7 und weiter in den Schachtofen 2 geführt werden, oder über die Topgasleitung 24 einer weiteren Verwendung zur Verfügung gestellt werden.

In der Kuppel des Einschmelzvergasers ist eine Schrott-Chargieröffnung 29 vorgesehen, durch die portionierter Schrott einbringbar ist. Wie in Fig. 4 näher dargestellt, mündet in die Öffnung 29 eine Schrott-Chargiereinrichtung 30, die eine Dichtklappe 31 und eine vorgeschaltete Zellradschleuse 32 als Portioniereinrichtung für Schrott aufweist, die über ein Plattenförderband 33 beschickt wird. Der Schrott-Chargiereinrichtung 30 ist gasdicht ein Schrottbunker 34 aufgesetzt, der seinerseits austragsseitig mit einem gasdichten Abschluß 35 versehen ist.

Die Schrottzugabe kann im erfindungsgemäßen Verfahren sowohl direkt in den Einschmelzvergaser erfolgen (Fig. 1) als auch zusätzlich (Fig. 2) oder ausschließlich (Fig. 3) in den Schachtofen, wobei die Schrott-Chargiereinrichtung des Schachtofens ähnlich ausgestaltet ist wie die in Fig. 4 dargestellte.

Die Erfindung ist durch folgende Beispiele näher beschrieben :

Beispiel 1 : Schrottzugabe direkt in den Einschmelzvergaser

Als Schrott wurden Konsumschrott, als eisenoxidhältiger Einsatzstoff Eisenerz und als Kohlenstoffträger Steinkohle verwendet. Die Zusammensetzung der Einsatzstoffe war wie folgt (in Masse-%) :

Steinkohle:

| | Roh % | wasserfrei % |
|---|---|---|
| $H_2O$ | 5,60 | |
| Asche | 5,80 | 6,1 |
| Flüchtige | 29,20 | 30,8 |
| $C_{fix}$ | 59,40 | 62,7 |

Elementaranalyse:

|                | wasserfrei % |
|----------------|--------------|
| Cges           | 81,3         |
| H              | 4,8          |
| N              | 1,4          |
| O              | 5,8          |
| S              | 0,5          |

Erz:

| Feuchte   | 2   % |
|-----------|-------|
| Fe        | 65  % |
| CaO       | 0,1 % |
| MgO       | 0,1 % |
| $Al_2O_3$ | 1,0 % |
| $SiO_2$   | 3,0 % |

Konsumschrott:

| Fe   | 90        % |
|------|-------------|
| Al   | 1 - 2     % |
| Cu   | 0,4       % |
| Sn   | 0,2       % |
| Zn   | 0,2       % |
| Rest | organische Bestandteile |

Bei Einsatz von 1 t Steinkohle obiger Zusammensetzung wurden im Einschmelzvergaser 1760 m³ (Normalbedingungen) Reduktionsgas folgender Zusammensetzung gebildet (in Vol.-%) :

| CO      | 64% |
|---------|-----|
| $H_2$   | 30% |
| $CO_2$  | 2%  |
| $N_2$   | 4%  |

Als eisenhältiger Einsatzstoff wurde eine Erz/Schrott-Mischung im Verhältnis 60 : 40 verwendet. Pro Tonne erzeugten Roheisens wurden 755 kg Erz, 110 kg Kalkstein, 504 kg Schrott und 570 kg Kohle verbraucht. Das Roheisen wies folgende Zusammensetzung auf (in Masse-%) :

| C    | 3,5 %  |
|------|--------|
| Mn   | 0,1 %  |
| Si   | 1,0 %  |
| S    | 0,06%  |
| P    | 0,09%  |
| Cu   | 0,09%  |
| Sn   | 0,05%  |
| Fe   | Rest   |

Pro Tonne Roheisen wurden weiters 920 m³ (Normalbedingungen) Topgas gewonnen, das zu 53% aus CO, 19% aus $H_2$, 24% aus $CO_2$ und 4% aus $N_2$ bestand (in Vol.-%).

Schlackenbildung : 120 kg/t Roheisen.

5

Beispiel 2 : Schrottzugabe in den Schachtofen

Es wurden die gleichen Ausgangsstoffe wie in Beispiel 1 verwendet. Auch das Erz/Schrott-Verhältnis von 60 : 40 wurde beibehalten. Bei dieser Verfahrensvariante wurden 714 kg Erz, 100 kg Kalkstein, 476 kg Schrott und 500 kg Kohle pro Tonne erzeugten Roheisens verbraucht. Das Roheisen wies folgende Zusammensetzung auf (in Masse-%) :

| | |
|---|---|
| C | 4 % |
| Mn | 0,1 % |
| Si | 1,0 % |
| S | 0,05% |
| P | 0,08% |
| Cu | 0,12% |
| Sn | 0,05% |
| Fe | Rest |

Pro Tonne Roheisen wurden weiters 780 m$^3$ (Normalbedingungen) Topgas gewonnen, das zu 51% aus CO, 18% aus $H_2$, 27% aus $CO_2$ und 4% aus $N_2$ bestand (in Vol.-%).
Schlackenbildung : 110 kg/t Roheisen.

## Patentansprüche

1. Verfahren zur Gewinnung von flüssigem Roheisen oder Stahlvorprodukten aus stückigen, eisenoxidhältigen Einsatzstoffen (4), wobei die Einsatzstoffe (4) in einer Direktreduktionszone (2) zu Eisenschwamm reduziert werden, der Eisenschwamm in einer Einschmelzvergasungszone (15) unter Zufuhr von Kohlenstoffträgern und sauerstoffhältigem Gas, welche ein Kohlefließbett ausbilden, erschmolzen und ein CO- und $H_2$-hältiges Reduktionsgas erzeugt wird, welches in die Direktreduktionszone (2) eingeleitet und dort umgesetzt wird, dadurch gekennzeichnet, daß

a) zusätzlich zum Eisenschwamm Schrott in die Einschmelzvergasungszone (15) chargiert wird,

b) der Schrott ein Schüttgewicht zwischen 300 und 1000 kg/m$^3$, vorzugsweise zwischen 400 und 600 kg/m$^3$, aufweist, und

c) die Temperatur des Kohlefließbettes auf 1500 bis 1700°C gehalten wird,

wobei der Schrott unter Aufrechterhaltung reduzierender Bedingungen das Kohlefließbett passiert, aufgekohlt und geschmolzen wird und gegebenenfalls vorhandene organische Verunreinigungen pyrolysiert werden.

2. Verfahren nach Anspruch 1, dadurch gekennzeichnet, daß der Schrott vor dem Chargieren in Stück- oder Paketform aufbereitet wird.

3. Verfahren nach Anspruch 2, dadurch gekennzeichnet, daß der Schrott vor der Aufbereitung mit brennbaren Stoffen aus Müll vermischt wird.

4. Verfahren nach einem der Ansprüche 1 bis 3, dadurch gekennzeichnet, daß organische Verunreinigungen enthaltender Schrott ohne Vorwärmung direkt in die Einschmelzvergasungszone (15) eingesetzt wird.

5. Verfahren nach Anspruch 1 oder 2, dadurch gekennzeichnet, daß kleinstückiger, an organischen Verunreinigungen armer Schrott vor dem Chargieren in die Einschmelzvergasungszone (15) vorgewärmt wird, insbesondere durch gemeinsames Einbringen mit den eisenoxidhältigen Einsatzstoffen in die Direktreduktionszone (2).

6. Verfahren nach einem der Ansprüche 1 bis 5, dadurch gekennzeichnet, daß zumindest ein Teilstrom des Reduktionsgases aus der Einschmelzvergasungszone (15) abgezweigt und nach Naßreinigung der Einschmelzvergasungszone (15) und/oder der Direktreduktionszone (2) zugeführt wird.

7. Verfahren nach Anspruch 6, dadurch gekennzeichnet, daß die Zuführung von sauerstoffhaltigem Gas in die Einschmelzvergasungszone (15) zeitweise verringert bis unterbrochen wird und die Schrottzufuhr erhöht wird.

8. Verfahren nach einem der Ansprüche 1 bis 7, dadurch gekennzeichnet, daß bei Einsatz von zinnhältigem Schrott dem erschmolzenen Metall metallisches Calcium als solches oder gelöst in Calciumhalogenidschlacke zugesetzt wird.

9. Verfahren nach einem der Ansprüche 1 bis 7, dadurch gekennzeichnet, daß bei Einsatz von kupferhältigem Schrott dem erschmolzenen Metall Natriumsulfid- oder Natriumsulfatschlacke zugesetzt werden.

10. Verfahren nach Anspruch 3 oder 4, dadurch gekennzeichnet, daß bei Einsatz von organische Verun-

EP 0 302 047 B1

reinigungen, insbesondere PVC enthaltendem Schrott dem Reduktionsgas Feinkalk zugegeben wird.

11.Anlage zur Durchführung des Verfahrens nach einem oder mehreren der Ansprüche 1 bis 10,
— mit einem Direktreduktions-Schachtofen (1), der eine Einsatzstoff-Zuleitung (3) für stückiges Eisenerz (4), eine Zuleitung (7) für ein Reduktionsgas sowie eine Ableitung (20) für das in ihm gebildete Reduktionsprodukt und eine Ableitung (22) für das Topgas aufweist, und
— mit einem Einschmelzvergaser (6), in den die das Reduktionsprodukt aus dem Schachtofen (1) zuführende Leitung (20) mündet und der Zuleitungen (9 bis 13) für sauerstoffhältige Gase und Kohlenstoffträger sowie eine in den Schachtofen (1) mündende Ableitung (7) für gebildetes Reduktionsgas sowie Abstiche (18, 19) für Roheisen (16) und Schlacke (17) aufweist, gekennzeichnet durch eine Schrott-Chargiereinrichtung (30).

12. Anlage nach Anspruch 11, dadurch gekennzeichnet, daß die Schrott-Chargiereinrichtung (30) eine von einem gasdicht abschließbaren Schrottbunker (34) zu einer Portioniereinrichtung (32) führende Fördereinrichtung (33) aufweist, wobei zwischen der Fördereinrichtung (33) und der Schrott-Chargieröffnung (29) eine gasdichte Verschlußeinrichtung (31) vorgesehen ist.

13. Anlage nach Anspruch 12, dadurch gekennzeichnet, daß die Portioniereinrichtung (32) als Zellradschleuse ausgebildet ist.

14. Anlage nach einem der Ansprüche 11 bis 13, dadurch gekennzeichnet, daß eine Schrott-Chargieröffnung (29) am oberen Teil des Einschmelzvergasers (6) vorgesehen ist (Fig. 1, Fig. 2).

15. Anlage nach einem der Ansprüche 11 bis 14, dadurch gekennzeichnet, daß eine Schrott-Chargieröffnung (29) am oberen Teil des Schachtofens (1) vorgesehen ist (Fig. 2, Fig. 3).

16. Anlage nach einem der Ansprüche 11 bis 15, dadurch gekennzeichnet, daß vom Einschmelzvergaser (6) eine Reduktionsgasleitung (26) zu einem Naßwäscher (25) führt, von dem eine Reingas-Ableitung (28) mit der Zuleitung (7) für das Reduktionsgas oder mit der Ableitung (24) für das Topgas verbindbar ist.

## Claims

1. Process of recovering molten pig iron or steel pre-products from lumpy iron-oxide containing charging substances (4), wherein the charging substances (4) are reduced in a direct reduction zone (2) so as to form sponge iron, the sponge iron is smelted in a melt-down gasifying zone (15) while supplying carbon carriers and oxygen-containing gas, which form a coal fluidised bed, and wherein a CO and $H_2$ containing reduction gas is produced, which is introduced into the direct reduction zone (2) and is reacted there, characterised in that

a) scrap is charged into the melt-down gasifying zone (15), in addition to the sponge iron,

b) the scrap has an apparent weight of between 300 and 1,000 $kg/m^3$, preferably between 400 and 600 $kg/m^3$, and

c) the temperature of the coal fluidised bed is maintained at 1,500 to 1,700°C,

wherein the scrap passes the coal fludised bed while maintaining reducing conditions, is carbonised and smelted and possibly present organic impurities are pyrolysed.

2. Process according to claim 1, characterised in that the scrap is processed into lump or bundle form prior to charging.

3. Process according to claim 2, characterised in that the scrap is mixed with combustible matter from refuse prior to being processed.

4. Process according to one of claims 1 to 3, characterised in that scrap containing organic impurities is directly introduced into the melt-down gasifying zone (15) without any preheating.

5. Process according to claim 1 or 2, characterised in that scrap consisting of small lumps and poor in organic impurities is preheated prior to charging into the melt-down gasifying zone (15), in particular by introducing it into the direct reduction zone (2) along with the iron-oxide containing charging substances.

6. Process according to one of claims 1 to 5, characterised in that at least a partial flow of the reduction gas is branched off from the melt-down gasifying zone (15) and is, after wet scrubbing, supplied to the melt-down gasifying zone (15) and/or the direct reduction zone (2).

7. Process according to claim 6, characterised in that the supply of oxygen-containing gas into the melt-down gasifying zone (15) is temporarily reduced to interrupted and the supply of scrap is increased.

8. Process according to one of claims 1 to 7, characterised in that, when using tin-containing scrap, metallic calcium as such or dissolved in calcium halide slag is added to the smelted metal.

9. Process according to one of claims 1 to 7, characterised in that, when using copper-containing scrap, sodium sulfide slag or sodium sulfate slag is added to the smelted metal.

10. Process according to claim 3 or 4, characterised in that, when using scrap containing organic impurities, in particular PVC, fine lime is added to the reduction gas.

11. Arrangement for carrying out the process according to one or more of claims 1 to 10, comprising
— a direct reduction shaft furnace (1), which includes a charging substance supply duct (3) for lumpy iron ore (4), a supply duct (7) for a reduction gas as well as discharge duct (20) for the reduction product formed therein and a discharge duct (22) for the top gas, and
— a melt-down gasifier (6), into which the duct (20) supplying the reduction product from the shaft furnace (1) enters and which includes supply ducts (9 to 13) for oxygen-containing gases and carbon carriers as well as a discharge duct (7) for reduction gas formed running into the shaft furnace (1) as well as taps (18, 19) for pig iron (16) and slag (17), characterised by a scrap charging means (30).

12. Arrangement according to claim 11, characterised in that the scrap charging means (30) includes a conveying means (33) running from a gas-tightly sealable scrap hopper (34) to a portioning means (32), a gas-tight stopper means (31) being provided between the conveying means (33) and the scrap charging opening (29).

13. Arrangement according to claim 12, characterised in that the portioning means (32) is designed as a cellular wheel sluice.

14. Arrangement according to one of claims 11 to 13, characterised in that a scrap charging opening (29) is provided at the upper part of the melt-down gasifier (6) (Fig. 1, Fig. 2).

15. Arrangement according to one of claims 11 to 14, characterised in that a scrap charging opening (29) is provided at the upper part of the shaft furnace (1) (Fig. 2, Fig. 3).

16. Arrangement according to one of claims 11 to 15, characterised in that a reduction gas duct (26) leads from the melt-down gasifier (6) to a wet scrubber (25), from where a pure gas discharge duct (28) is connectable with the supply duct (7) for the reduction gas or with the discharge duct (24) for the top gas.


## Revendications

1. Procédé d'obtention de fonte liquide ou de préproduits de l'acier à partir de charges (4) contenant de l'oxyde de fer, en morceaux, dans lequel on réduit les charges (4) dans une zone (2) de réduction directe pour donner de l'éponge de fer, on fait fondre l'éponge de fer dans une zone (15) de gazéification par mise en fusion en ajoutant des matériaux carbonés et du gaz contenant de l'oxygène, qui forment un lit coulant de charbon et on produit un gaz de réduction contenant Co et $H_2$ que l'on introduit dans la zone (2) de réduction directe et qui s'y convertit, procédé caractérisé par le fait que
a) en plus de l'éponge de fer, on charge de la ferraille dans la zone (15) de gazéification par mise en fusion,
b) la ferraille présente une densité apparente entre 300 et 1000 Kg/m³, de préférence entre 400 et 600 kg/m³, et
c) la température du lit coulant de charbon est maintenue 1500 à 1700°C,
étant précisé que, en maintenant les conditions réductrices, la ferraille passe le long du lit coulant de charbon, s'y carbure et fond, et que les impuretés organiques éventuellement présentes sont pyrolysées.

2. Procédé selon la revendication 1, caractérisé par le fait qu'avant le chargement on prépare la ferraille sous forme de morceaux ou de paquets.

3. Procédé selon la revendication 2, caractérisé par le fait qu'avant la préparation, on mélange la ferraille à des matériaux combustibles provenant des ordures ménagères.

4. Procédé selon l'une des revendications 1 à 3, caractérisé par le fait que l'on met directement en oeuvre, sans préchauffage, dans la zone (15) de gazéification par mise en fusion, de la ferraille contenant des impuretés organiques.

5. Procédé selon la revendication 1 ou 2, caractérisé par le fait qu'avant le chargement dans la zone (15) de gazéification par mise en fusion, on préchauffe la ferraille présentée en petits morceaux, pauvre en impuretés organiques, en particulier en l'envoyant dans la zone (2) de réduction directe en même temps que les charges contenant de l'oxyde de fer.

6. Procédé selon l'une des revendications 1 à 5, caractérisé par le fait qu'à partir de la zone (15) de gazéification par mise en fusion on fait dériver au moins un flux partiel de gaz de réduction et qu'après nettoyage humide on l'envoie dans la zone (15) de gazéification par mise en fusion et/ou dans la zone (2) de réduction directe.

7. Procédé selon la revendication 6, caractérisé par le fait que, par moments, on réduit, jusqu'à l'interrompre, l'envoi de gaz, contenant de l'oxygène, dans la zone (15) de gazéification par mise en fusion et que l'on accroît l'arrivée de ferraille.

8. Procédé slon l'une des revendications 1 à 7, caractérisé par le fait que si l'on utilise de la ferraille contenant de l'étain, on ajoute au métal en fusion du calcium métallique en tant que tel ou dissous dans des scories d'halogénure de calcium.

9. Procédé selon l'une des revendications 1 à 7, caractérisé par le fait que si l'on utilise de la ferraille contenant du cuivre, on ajoute au métal en fusion des scories de sulfure de sodium ou de sulfate de sodium.

10. Procédé selon la revendication 3 ou 4, caractérisé par le fait que si l'on utilise des impuretés organiques, en particulier de la ferraille contenant du PVC, on ajoute au gaz de réduction de la chaux pulverisée.

11. Installation pour la mise en oeuvre du procédé selon une ou plusieurs des revendications 1 à 10,
— comportant un four à cuve (1) de réduction directe, qui présente une conduite (3) d'arrivée de la charge pour le minerai de fer en morceaux (4), une conduite (7) d'arrivée du gaz de réduction ainsi qu'une conduite (20) de départ du produit de réduction qui y est formé, et une conduite (22) de départ du gaz de tête, et
— comportant un gazéificateur de mise en fusion (6) dans lequel débouche la conduite (20) qui amène le produit de réduction provenant du four à cuve (1) et qui présente des conduites (9 à 13) pour l'arrivée des gaz contenant de l'oxygène et des matériaux carbonés ainsi qu'une conduite (7), débouchant dans le four à cuve (1), pour le départ du gaz de réduction formé, ainsi que des sorties (18, 19) pour la fonte (16) et pour le laitier (17), caractérisée par un dispositif (30) de chargement de la ferraille.

12. Installation selon la revendication 11, caractérisée par le fait que le dispositif (30) de chargement de la ferraille présente un dispositif d'alimentation (33) qui, depuis une trémie à ferraille (34), obturable de façon étanche au gaz, conduit à un dispositif (32) de préparation en lots, étant précisé qu'entre le dispositif d'alimentation (33) et l'ouverture (29) de chargement de la ferraille est prévu un dispositif (31) d'obturation étanche au gaz.

13. Installation selon la revendication 12, caractérisée par le fait que le dispositif (32) de préparation en lots est prévu sous forme d'une écluse rotative à cellules.

14. Installation selon l'une des revendications 11 à 13, caractérisée par le fait qu'une ouverture (29) de chargement de la ferraille est prévue à la partie supérieure du gazéificateur par mise en fusion (6) (figure 1, figure 2).

15. Installation selon l'une des revendications 11 à 14, caractérisée par le fait qu'une ouverture (29) de chargement de la ferraille est prévu à la partie supérieure du four à cuve (1) (figure 2, figure 3).

16. Installation selon l'une des revendications 11 à 15, caractérisée par le fait que depuis le gazéificateur par mise en fusion (6), une conduite (26) de gaz de réduction conduit à un laveur humide (25) d'où une conduite (28) de départ du gaz nettoyé peut être reliée avec la conduite (7) d'arrivée du gaz de réduction ou avec la conduite (24) de départ du gaz de tête.

FIG. 1

FIG. 2

FIG. 3

FIG. 4